# EUROPÄISCHE PATENTSCHRIFT

(11) **EP 2 443 184 B1**
(45) Veröffentlichungstag und Bekanntmachung des Hinweises auf die Patenterteilung: **08.07.2015**
(21) Anmeldenummer: 10714287.9
(22) Anmeldetag: 20.04.2010
(51) Int. Cl.: C08J 5/12, C08J 7/12, C08J 7/18, B32B 7/10, B29C 65/50, B32B 37/00

(54) **VERFAHREN ZUM DAUERHAFTEN VERBINDEN ZWEIER BAUTEILE**
METHOD FOR PERMANENTLY CONNECTING TWO COMPONENTS
PROCÉDÉ POUR LIER DEUX COMPOSÉS DE MANIÈRE PERMANENTE

(30) Priorität: 15.06.2009 DE 102009026945
(43) Veröffentlichungstag der Anmeldung: 25.04.2012
(73) Patentinhaber: Robert Bosch GmbH, 70442 Stuttgart (DE)
(72) Erfinder: HONER, Michael, 70839 Gerlingen (DE); ACKERMANN, Jens, 70437 Stuttgart (DE)
(86) Internationale Anmeldenummer: PCT/EP2010/055165
(87) Internationale Veröffentlichungsnummer: WO 2010/145865

(56) Entgegenhaltungen:
- WO-A1-98/30646
- WO-A1-02/055591
- WO-A2-2008/101699
- US-A- 5 755 913
- US-A- 6 159 331
- US-A1- 2002 014 306

## Beschreibung

### Stand der Technik

Die Erfindung betrifft ein Verfahren zum dauerhaften Verbinden zweier Bauteile.

Bei einem aus der DE 101 01 025 A1 bekannten Verfahren dieser Art werden zwei Bauteile, die aus chemisch inkompatiblen Polymeren bestehen, einer Plasmabehandlung unterzogen und anschließend zusammengefügt. Für das Verfahren ist es erforderlich, dass die Oberflächen der miteinander zu verbindenden Bauteile aneinander anliegen, um eine möglichst große gemeinsame Kontaktfläche zur Ausbildung einer hohen Festigkeit zu ermöglichen.

Weiterhin sind so genannte Laserdurchstrahlschweißverfähren allgemein bekannt. Bei diesen Verfahren werden zwei aus Kunststoff bestehende Bauteile miteinander verbunden, wobei eines der Bauteile für Laserlicht durchlässig, und das andere Bauteil laserlichtabsorbierend ausgebildet ist. Die Laserabsorption lässt sich dabei mittels Füllstoffen bewirken, die z.B. aus Ruß, Färbstoffen oder Pigmenten bestehen können. Auch hierbei müssen die beiden miteinander zu verbindenden Bauteile in Anlagekontakt zueinander gebracht werden, wobei das Laserlicht von der Seite des laserlichtdurchlässigen Bauteils her in den Fügebereich zwischen den beiden Bauteilen eingeleitet wird. Im Fügebereich erfolgt dann ein Aufschmelzen zunächst des laserlichtabsorbierenden Bauteils, und durch Wärmeübergang anschließend ein Aufschmelzen des laserlichtdurchlässigen Bauteils, so dass die beiden Bauteile im Fügebereich miteinander dicht verbunden werden.

Anstelle zweier Bauteile, bei denen zumindest ein Bauteil aus einem laserlichtabsorbierenden Material hergestellt ist bzw. für Laserlicht undurchlässig ist, ist es auch bekannt, zwischen zwei laserlichtdurchlässigen Bauteilen eine Zwischenschicht anzuordnen, die laserlichtabsorbierend ausgebildet ist. Bekannt sind hierbei beispielsweise Verfahren, bei denen eine Folie, die im Bereich der Wellenlänge der Laserlichtquelle absorbierend ist oder eine Flüssigkeit mit entsprechenden Eigenschaften zwischen den Bauteilen anzuordnen. Das letztgenannte Verfahren unter Verwendung einer Flüssigkeit ist beispielsweise aus der WO 2002038677 A2 bekannt. Nachteilig bei den Verfahren, welche im Fügebereich der beiden Bauteile durch Erwärmung mittels Laserlicht eine Verbindung zwischen den beiden Bauteilen herstellen ist, dass diese Verfahren für chemisch inkompatible Polymere nicht einsetzbar sind.

Das Dokument WO 98/30646 A1 offenbart ein Verfahren zur Erreichung einer verbesserten Haftung zwischen Oberflächen von zwei Polymeren

Aus dem Dokument US 6,159,331 A ist ein Verfahren zur Nutzung eines Überbrückungsmittels bei der Herstellung eines Laminats bekannt.

Das Dokument US 5,755,913 A offenbart ein Verfahren zur haftmittelfreien Verbindung von zwei Polymeroberflächen.

Aus dem Dokument US 2002/014306 A1 ist Verfahrens zur Herstellung von Strukturen mit mehreren Schichten mittels einer monomolekularen Haftung bekannt.

Das Dokument WO 2008/101699 A2 offenbart ein Verfahren zum lasergestützten Bonden.

### Offenbarung der Erfindung

Ausgehend von dem dargestellten Stand der Technik liegt der Erfindung daher die Aufgabe zugrunde, ein Verfahren zum dauerhaften Verbinden zweier Bauteile bereitzustellen, das eine Alternative zu dem Laserdurchstrahlverfahren sowie zu dem eine Plasmabehandlung zumindest eines der Bauteile erforderlichen Verbindungsverfahrens darstellt. Diese Aufgabe wird bei einem Verfahren zum dauerhaften Verbinden zweier Bauteile mit den Merkmalen des Anspruchs 1 gelost. Der Erfindung liegt dabei der Gedanke zugrunde, dass die Verbindung zwischen den beiden Bauteilen im Fügebereich durch eine Vernetzung auf molekularer Ebene mittels chemischer Bestandteile erfolgen soll, welche nach Einbringen einer für das Starten der chemischen Reaktion erforderlichen Anfangsenergie sowohl eine Bindung mit den Molekülen des einen Bauteils, als auch mit den Molekülen des anderen Bauteils eingehen.

Vorteilhafte Weiterbildungen des erfindungsgemäßen Verfahrens zum dauerhaften Verbinden zweier Bauteile sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Besonders bevorzugt ist es, dass die chemische Reaktion nach dem Starten selbständig verläuft. Dadurch ist nur ein einmaliges, ggf. sehr kurzes Einbringen einer Anfangsenergie erforderlich, um den chemischen Prozess zu starten.

Besonders bevorzugt lässt sich das erfindungsgemäße Verfahren weiterhin bei Bauteilen einsetzen, die aus chemisch inkompatiblen Polymeren, insbesondere Thermoplasten, Elastomeren und/oder Dumeren bestehen. Derartige Bauteile lassen sich beispielsweise mit den bekannten konventionellen Laserdurchstrahlverfahren nicht miteinander verbinden.

In einer vorteilhaften Weiterbildung ist es vorgesehen, dass die Bauteile in Anlagekontakt miteinander angeordnet werden. Dadurch ist eine sichere Verbindung zwischen den beiden Bauteilen möglich, da nur kleine bzw. gar keine Abstände zwischen den Bauteilen im Fügebereich überbrückt werden müssen.

In einer besonders bevorzugten Ausführungsform der Erfindung ist es vorgesehen, dass die chemischen Bestandteile als Zwischenschicht ausgebildet bzw. angeordnet sind. Dadurch können die insbesondere aus Kunststoff bestehenden Bauteile unverändert übernommen werden, bzw. es müssen beim Herstellungsprozess der Bauteile keine chemischen Zusatzstoffe für die Bauteile verwendet werden.

Insbesondere ist es dabei vorgesehen, dass die Zwischenschicht als Beschichtung, Paste oder als Dotierungsmittel ausgebildet ist. Dadurch kann die Zwischenschicht je nach den speziellen Anforderungen de Bauteile optimal angepasst werden.

Als vorteilhafte chemische Bestandteile werden erfindungsgemäß peroxidische Verbindungen und/oder Präpolymere und/oder Oligomere eingesetzt.

Um den chemischen Prozess in Gang zu setzen ist es erfindungsgemäß vorgesehen, dass das Einbringen der Anfangsenergie durch eine Wärmezufuhr erfolgt. Da Wärmebehandlungen in der Industrie aus vielen anderen Anwendungen bekannt sind und sich sehr genau steuern lassen, kann damit das Verfahren großtechnisch einfach angewandt werden.

Erfindungsgemäß ist vorgesehen, dass das die chemischen Bestandteile enthaltende Bauteil bzw. die Zwischenschicht zumindest im Bereich der chemischen Bestandteile laserlichtabsorbierend ausgebildet ist und, dass die Anfangsenergie mittels Laserstrahlung eingebracht wird. Dadurch wird ein gezieltes Starten der chemischen Reaktion im Fügebereich zwischen den beiden Bauteilen ermöglicht, ohne dass die beiden Bauteile ansonsten erwärmt werden müssen.

Zur Erzielung der Laserlichtabsörption ist es in einer bevorzugten Ausführungsform vorgesehen, dass eines der Bauteile bzw. die Zwischenschicht einen Füllstoff enthält, der die Laserstrahlung absorbiert.

Als Alternative zum Starten der chemischen Reaktion mittels einer Wärmezufuhr ist es auch möglich, eine photoaktive Substanz vorzusehen, die unter Einwirkung von Licht die zum Starten der chemischen Reaktion erforderliche Anfangsenergie bereitstellt. Hier wird die Aktivierungsenergie durch die direkte Absorption von Photonen aufgebracht und nicht durch eine thermische Zersetzung von Molekülen in der Zwischenschicht. Es ist daher möglich, das Verbindungsverfahren bei, im Vergleich zum klassischen Laserstrahlschweißen, sehr niedrigen Temperaturen durchzuführen.

Insgesamt gesehen bietet das erfindungsgemäße Verfahren den besonderen Vorteil, dass nur ein sehr geringer Wärmeeintrag in die Fügezone und die Bauteile erforderlich ist. Dadurch lässt sich ein Verzug an den Bauteilen verhindern und gleichzeitig die Dauerfestigkeit der Verbindung erhöhen. Weiterhin können je nach Beschaffenheit der Zwischenschicht auch relativ große Spalte zwischen den Bauteilen überbrückt werden, da das Material der Zwischenschicht nicht aus der Fügezone getrieben wird, sondern dort verbleibt.

Weitere Vorteile, Merkmale und Einzelheiten der Erfindung ergeben sich aus der nachfolgenden Beschreibung bevorzugter Ausführungsbeispiele sowie anhand der Zeichnungen.

Dies zeigen in:
- Fig. 1: einen schematischen Schnitt durch eine Verbindung zwischen zwei Bauteilen mit dazwischen angeordneter Zwischenschicht,
- Fig. 2: die Anordnung gemäß Fig. 1 beim Einbringen bzw. Aktivieren der Zwischenschicht durch einen Laserstrahl und
- Fig. 3: die Anordnung gemäß der Fig. 1 und 2 nach dem Beenden der chemischen Reaktion, bei der die beiden Bauteile miteinander verbunden sind.

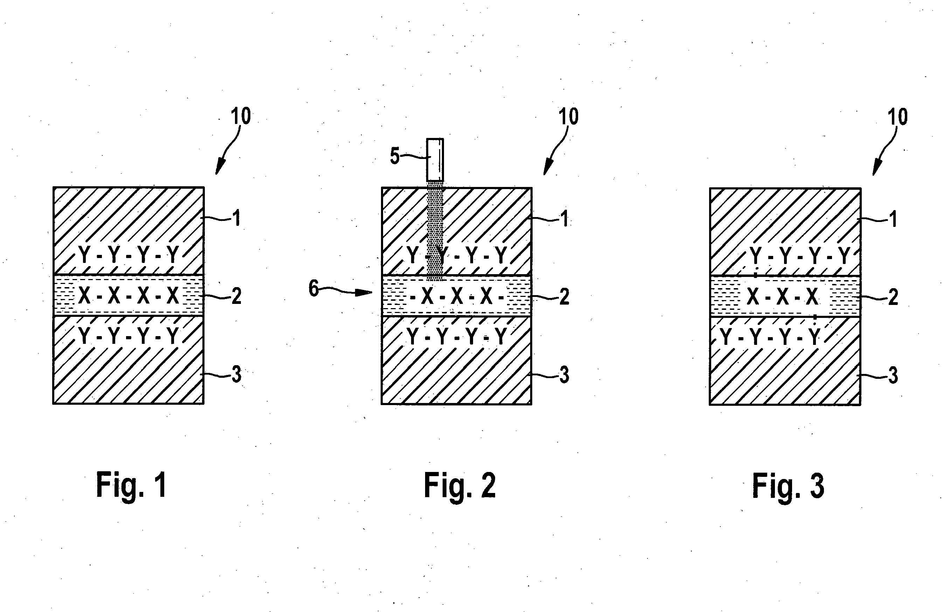

Bei der in den Fig. 1 bis 3 dargestellten Anordnung 10 sollen zwei Bauteile 1 und 3 unter Zwischenlage einer Zwischenschicht 2 dauerhaft miteinander verbunden werden. Hierbei bestehen die beiden Bauteile 1, 3 beispielsweise aus chemisch inkompatiblen Polymeren, insbesondere Thermoplasten, Elastomeren und/oder Duromeren. Die Zwischenschicht 2 kann entweder als Beschichtung wenigstens einer der beiden Bauteile 1, 3, oder als Paste oder als Dotierungsmittel ausgebildet sein. Die Zwischenschicht 2 selbst besteht bzw. enthält beispielsweise peroxidische Verbindungen, die durch Erwärmung freie Radikale bilden. Anstelle von peroxidischen Verbindungen können auch Präpolymere oder Oligomere verwendet werden, die durch Wärmezufuhr polymerisieren und durch dabei entstehende reaktive Endgruppen mit Molekülen der Bauteile 1, 3 eine Verbindung eingehen.

Erfindungswesentlich ist, dass durch die Zwischenschicht 2 nach einer Aktivierung mittels einer Anfangsenergie eine chemische Reaktion gestartet wird, in deren Folge die Moleküle der Zwischenschicht 2 (symbolisch dargestellt durch die X-Moleküle in den Fig. 1 bis 3) mit den Molekülen der Bauteile 1 und 3 (dargestellt durch die Y-Moleküle) eine Verbindung auf atomarer bzw. molekularer Ebene eingehen, die zu einer Vernetzung zwischen den Bauteilen 1 und 3 führt.

Die Aktivierung der chemischen Reaktion in der Zwischenschicht 2 wird bevorzugt mittels eines Laserstrahls 5 erreicht, der von einer nicht dargestellten Laserstrahlquelle erzeugt wird, und der in den Fügebereich 6 zwischen den Bauteilen 1 und 3, das heißt insbesondere in die Zwischenschicht 2 eingeleitet wird. Hierbei besteht entweder die Zwischenschicht 2 selbst aus einem laserlichtabsorbierenden Material, oder aber das dem Laserstrahl 5 gegenüberliegend angeordnete Bauteil 3 besteht aus einem laserlichtabsorbierenden Material, bzw. es sind dem Bauteil 3 laserlichtabsorbierende Füllmaterialien zugesetzt.

Alternativ ist es auch möglich, anstelle einer laserlichtabsorbierenden Zwischenschicht 2 bzw. einem laserlichtabsorbierenden Bauteil 3 eine Zwischenschicht vorzusehen, die eine photochemische Reaktion in Gang setzt.

In der Fig. 1 ist der Zustand der Anordnung 10 dargestellt, bei der zwischen den Bauteilen 1 und 3 unter Zwischenlage der Zwischenschicht 2 noch keine chemische Reaktion stattgefunden hat. Bei der Fig. 2 ist der Fall dargestellt, bei dem die Zwischenschicht 2 durch den Laserstrahl 5 aktiviert wird bzw. ein Energieeintrag in Form einer Wärmeenergie in der Zwischenschicht 2 erfolgt. Dies führt zum Starten eines chemischen Reaktionsprozesses, welcher nach Abstellen des Laserstrahls 5 bevorzugt sich selbständig aufrecht erhält, bis die chemische Reaktion abgeschlossen, ist. Dieser Zustand ist in der Fig. 3 dargestellt, bei der zumindest einzelne X-Moleküle mit Y-Molekülen der Bauteile 1 und 3 miteinander vernetzt sind bzw. eine Bindung eingegangen sind, und somit eine dauerhafte und feste Verbindung zwischen den Bauteilen 1 und 3 erzielt wird.

## Patentansprüche

1. Verfahren zum dauerhaften Verbinden zweier Bauteile (1, 3), bei dem zumindest einem der Bauteile (1, 3) mittelbar oder unmittelbar chemische Bestandteile zugeordnet sind, die mit Bestandteilen des anderen Bauteils (1, 3) reagieren, derart, dass sich die beiden Bauteile (1, 3) auf molekularer Ebene miteinander verbinden, wobei zum Starten der chemischen Reaktion eine Anfangsenergie in das zumindest eine Bauteil (1, 3), dem die chemischen Bestandteile mittelbar oder unmittelbar zugeordnet sind, eingebracht wird,
**dadurch gekennzeichnet,**
**dass** das Einbringen der Anfangsenergie durch eine Wärmezufuhr erfolgt, dass das die chemischen Bestandteile enthaltende Bauteil (1, 3) bzw. eine Zwischenschicht (2) zumindest im Bereich der chemischen Bestandteile laserlichtabsorbierend ausgebildet ist, dass die Anfangsenergie mittels Laserstrahlung eingebracht wird, dass die chemischen Bestandteile eine peroxidische Verbindung und/oder Präpolymere und/oder Oligomere enthalten, und dass die chemischen Bestandteile in einem Fügebereich (6) zwischen den beiden Bauteile (1, 3) angeordnet sind.

2. Verfahren nach Anspruch 1,
**dadurch gekennzeichnet,**
**dass** die chemische Reaktion nach dem Einbringen der Anfangsenergie selbständig verläuft.

3. Verfahren nach Anspruch 1 oder 2,
**dadurch gekennzeichnet,**
**dass** die beiden Bauteile (1, 3) aus chemisch inkompatiblen Polymeren, insbesondere Thermoplasten, Elastomeren und/oder Duromeren bestehen.

4. Verfahren nach einem der Ansprüche 1 bis 3,
**dadurch gekennzeichnet,**
**dass** die Bauteile (1, 3) in Anlagekontakt miteinander angeordnet werden.

5. Verfahren nach Anspruch 1,
**dadurch gekennzeichnet,**
**dass** die chemischen Bestandteile in einer Zwischenschicht (2) zwischen den beiden Bauteilen (1, 3) angeordnet sind.

6. Verfahren nach Anspruch 5,
**dadurch gekennzeichnet,**
**dass** die Zwischenschicht (2) als Beschichtung, Paste oder als Dotierungsmittel ausgebildet ist.

7. Verfahren nach Anspruch 1,
**dadurch gekennzeichnet,**
**dass** die Laserlichtabsorption mittels wenigstens eines Füllstoffes in dem der Laserstrahlungsquelle abgewandten Bauteil (3) oder der Zwischenschicht (2) erzielt wird.

## Claims

1. Method for permanently connecting two components (1, 3), in which at least one of the components (1, 3) is directly or indirectly associated with chemical constituents that react with constituents of the other component (1, 3) such that the two components (1, 3) are cross-linked with each other on a molecular level, wherein an initial energy is introduced into the at least one component (1, 3) associated directly or indirectly with the chemical constituents for starting the chemical reaction,
**characterized in that**
the introduction of the initial energy takes place by supplying heat, **in that** the component (1, 3) containing chemical constituents or an intermediate layer (2) is formed at least in the region of the chemical constituents as absorbing laser light, **in that** the initial energy is introduced by means of laser radiation, **in that** the chemical constituents include a peroxide compound and/or prepolymers and/or oligomers and **in that** the chemical constituents are arranged in a joining region (6) between the two components (1, 3).

2. Method according to Claim 1,
**characterized**
**in that** the chemical reaction proceeds automatically after the introduction of the initial energy.

3. Method according to Claim 1 or 2,
**characterized**
**in that** the two components (1, 3) consist of chemically incompatible polymers, in particular thermoplastics, elastomers and/or thermosets.

4. Method according to one of Claims 1 to 3,
**characterized**
**in that** the components (1, 3) are arranged in abutting contact with one another.

5. Method according to Claim 1,
**characterized**
**in that** the chemical constituents are arranged in an intermediate layer (2) between the two components (1, 3).

6. Method according to Claim 5,
**characterized**
**in that** the intermediate layer (2) is formed as a coating, paste or dopant.

7. Method according to Claim 1,
**characterized**
**in that** the laser light absorption is achieved by means of at least one filler in the component (3) facing away from the laser radiation source or in the intermediate layer (2).

## Revendications

1. Procédé pour lier deux composants (1, 3) de manière permanente, dans lequel des constituants chimiques sont associés de manière directe ou indirecte à au moins l'un des composants (1, 3), lesquels réagissent avec des constituants de l'autre composant (1, 3) de telle sorte que les deux composants (1, 3) soient liés l'un à l'autre sur le plan moléculaire, au début de la réaction chimique, une énergie initiale étant introduite dans l'au moins un composant (1, 3) auquel sont associés de manière directe ou indirecte les constituants chimiques,
**caractérisé en ce que**
l'introduction de l'énergie initiale s'effectue par apport de chaleur, **en ce que** le composant (1, 3) contenant les constituants chimiques ou une couche intermédiaire (2) est réalisé(e) au moins dans la région des constituants chimiques de manière à pouvoir absorber la lumière laser, **en ce que** l'énergie initiale est introduite au moyen d'un rayonnement laser, **en ce que** les constituants chimiques contiennent un composé de peroxyde et/ou des prépolymères et/ou des oligomères et **en ce que** les constituants chimiques sont disposés dans une région d'assemblage (6) entre les deux composants (1, 3).

2. Procédé selon la revendication 1,
**caractérisé en ce que**
la réaction chimique se déroule automatiquement après l'introduction de l'énergie initiale.

3. Procédé selon la revendication 1 ou 2,
**caractérisé en ce que**
les deux composants (1, 3) se composent de polymères chimiquement incompatibles, en particulier de thermoplastiques, d'élastomères et/ou de duromères.

4. Procédé selon l'une quelconque des revendications 1 à 3,
**caractérisé en ce que**
les composants (1, 3) sont disposés en contact d'application l'un contre l'autre.

5. Procédé selon la revendication 1,
**caractérisé en ce que**
les constituants chimiques sont disposés dans une couche intermédiaire (2) entre les deux composants (1, 3).

6. Procédé selon la revendication 5,
**caractérisé en ce que**
la couche intermédiaire (2) est réalisée sous forme de revêtement, de pâte ou sous forme de moyen de dopage.

7. Procédé selon la revendication 1,
**caractérisé en ce que**
l'absorption de lumière laser s'effectue au moyen d'au moins une charge dans le composant (3) opposé à la source de rayonnement laser ou dans la couche intermédiaire (2).
